# EUROPÄISCHE PATENTANMELDUNG

(11) **EP 1 199 291 A1**
(43) Veröffentlichungstag der Anmeldung: **24.04.2002**
(21) Anmeldenummer: 00122638.0
(22) Anmeldetag: 17.10.2000
(51) Int. Cl.: C05G 5/00, C05C 9/02

(54) **Beschichtetes chemisches Erzeugnis und Verfahren zur Herstellung**

(71) Anmelder: Agra Dünger GmbH, 66333 Völklingen (DE)
(72) Erfinder:
(74) Vertreter: Wunderlich, Rainer, Dipl.-Ing.

(57) **Zusammenfassung**

Die Erfindung betrifft ein chemisches Erzeugnis, insbesondere ein Düngemittel, sowie ein Verfahren zur Herstellung dieses chemischen Erzeugnisses. Das chemische Erzeugnis umfasst einen Kern, der mindestens eine Wirksubstanz enthält und der von einem Hüllmaterial überzogen ist, welches sich von der Wirksubstanz unterscheidet. Erfindungsgemäß wird eine kontrollierte, verzögerte Freisetzung der Wirksubstanz durch das Hüllmaterial dadurch erreicht, dass das Hüllmaterial im Wesentlichen aus Methylenharnstoff besteht.

## Beschreibung

Die Erfindung betrifft ein chemisches Erzeugnis, insbesondere ein Düngemittel, nach dem Oberbegriff des Anspruches 1 sowie ein Verfahren zur Herstellung eines chemischen Erzeugnisses nach dem Oberbegriff des Anspruches 12.

Ein gattungsgemäßes chemisches Erzeugnis ist beispielsweise in der DE 28 34 513 A1 beschrieben und weist einen Kern auf, der mindestens eine Wirksubstanz enthält und der von einem Hüllmaterial überzogen ist, welches sich von der Wirksubstanz unterscheidet. Weiterhin ist in der DE 28 513 A1 ein Verfahren zur Herstellung eines solchen chemischen Erzeugnisses beschrieben.

Chemische Erzeugnisse der genannten Art finden insbesondere als Düngemittel in der Land- und Forstwirtschaft Verwendung, können aber auch im Garten- und Heimbereich eingesetzt werden.

Da den Böden bei intensiver landwirtschaftlicher Nutzung mehr Nährstoffe, insbesondere Stickstoff, entzogen werden, als auf natürlichem Weg, beispielsweise durch verrottendes pflanzliches Material, wieder zugeführt wird, müssen die fehlenden Nährstoff künstlich durch Dünger zugesetzt werden.

Eine allgemeine Aufgabenstellung besteht hierbei darin, die Nährstoffe örtlich und zeitlich zielgenau zuzuführen, wobei die im Allgemeinen sehr komplexen chemischen und physikalisch-chemischen Gegebenheiten der unterschiedlichen Böden zu berücksichtigen sind.

Ein Grundproblem betrifft dabei die rasche Auswachung der Düngerinhaltsstoffe aufgrund der sich bei einer hohen Umweltbelastung nur eine vergleichsweise geringe Nutzwirkung der eingebrachten Nährstoffe erzielen lässt.

Es wurde daher in der DE 28 34 513 A1 vorgeschlagen, ein körniges Düngemittel mit einer geeigneten abbaubaren Beschichtung zu versehen, welche eine rasche Auswaschung verhindern und eine verzögerte Freisetzung der Nährstoffe ermöglichen soll.

Als Beschichtungsmaterialien werden Schwefel, Wachse, Harze und/oder Kunststoffe wie Polyolefine und Polyurethane vorgeschlagen.

Diese Beschichtungen weisen den Nachteil auf, dass eine Nährstofffreisetzung nicht immer bei den für die Pflanze vorteilhaften Bedingungen erfolgt. Beispielsweise ist oft eine sehr starke Temperaturabhängigkeit des Abbauvorgangs gegeben, die den komplexen Wachstumserfordernissen einer Pflanze nicht gerecht werden kann.

Es ist **Aufgabe** der Erfindung, ein chemisches Erzeugnis der oben genannten Art anzugeben, bei dem die Freisetzung der enthaltenen Wirksubstanzen in sehr hohem Maße bedarfsgerecht, etwa entsprechend den konkret bestehenden Bedürfnissen einer Pflanze und/oder den Anforderungen eines Bodens, erfolgt. Weiterhin soll ein Verfahren zur Herstellung des chemischen Erzeugnisses angegeben werden.

Diese Aufgabe wird durch ein chemisches Erzeugnis mit den Merkmalen des Anspruches 1 beziehungsweise durch ein Verfahren mit den Merkmalen des Anspruchs 12 gelöst. Vorteilhafte Ausgestaltungen und Weiterbildungen der Erfindung sind in den abhängigen Ansprüchen angegeben.

Ein chemisches Erzeugnis der vorstehend genannten Art ist erfindungsgemäß dadurch weitergebildet, dass das Hüllmaterial im Wesentliichen aus Methylen-Harnstoff und/oder CDU (Crotonylidendiharnstoff) besteht.

Als Kernidee der Erfindung kann angesehen werden, eine Wirksubstanz, insbesondere ein auf oder in den Boden bringbares Erzeugnis, mit einer Umhüllung aus Methylen-Harnstoff oder CDU zu versehen, welche nach Erkenntnis der Erfindung eine besondere, sozusagen biologisch-aktive oder aktivierbare Eigenschaft aufweisen.

Der Erfindung liegt die Erkenntnis zugrunde, dass CDU und Methylen-Harnstoff und insbesondere langkettige Methylen-Harnstoff-Polymere im Boden definiert mikrobiell abgebaut werden. Dieser mikrobielle Abbau kann für eine definierte, sichere Freisetzung der Wirksubstanzen ausgenutzt werden.

Ein möglicher Grund für diese spezielle Eigenschaft beruht darauf, dass der mikrobielle Abbau des Methylen-Harnstoffs im Boden im Wesentlichen durch einen Bakterienstamm Ochrobactrum anthropi erfolgt. Diese sind in der Lage, Methylen-Harnstoff als alleinige Stickstoffquelle zu nutzen. Dieser Bakterienstamm findet sich üblicher Weise von Natur aus im Boden. Eine wesentliche Rolle spielt beim Abbau ein den Methylen-Harnstoff metabolisierendes Enzym, die MDUase (Methylendiurease oder Methylendiureadeiminase), die durch Methylen-Diharnstoff (MDU) und andere Methylenharnstoff-Fraktionen spezifisch induziert wird. Die Erkenntnis, dass die Synthese der MDUase selbst bei Anwesenheit hoher Ammoniumkonzentrationen im Boden nicht vollständig unterdrückt wird, hat praktische Bedeutung bei der Anwendung als len-Harnstoff-Dünger. Insbesondere kommt der Abbau des Methylen-Harnstoffs im Boden auch dann nicht zum Erliegen, wenn natürlich vorkommende Stickstoffverbindungen, wie Ammonium und Nitrat, vorliegen. Im ersten Reaktionsschritt werden NH₄⁺, CO₂ und ein aminierter MethylenHarnstoff aus Methylen-Diharnstoff gebildet (NH₂-CONHCH₂-NH₂). Diese Verbindung wird nichtenzymatisch zu Ammonium und der instabilen Verbindung N-hydroxymethylharnstoff (NH₂-CO-NH-CH₂OH) hydrolysiert. In zellfreien Extrakten wird der entstandene Harnstoff durch Urease zu CO₂ und NH₄⁺ hydrolysiert und Formaldehyd wird als Energiequelle genutzt und über Formiat als Zwischenprodukt zu CO₂ oxidiert. Die aus dem Harnstoff-Abbau freigesetzten Produkte werden von Bakterienzellen mit Hilfe ner Reihen unterschiedlicher Enzyme und Aufnahmesysteme metabolisiert, wobei in Ochrobactrum antropi keine GlutamatDehydrogenase auftritt. Stattdessen wird Ammonium durch die Glutamin-Synthetase, eine NAD-abhängige AlaninDehydrogenase (AlaDH) und spezifische Transaminasen zu Aminosäuren umgewandelt. Dabei wird Formaldehyd über Formiat zu CO₂ durch eine NAD-abhängige Formaldehyd- und Formiat-Dehydrogenase oxidiert und wird somit nicht freigesetzt. Weiterhin findet in Ochrobactrum anthropi keine Assimilation des Formaldehyds statt.

Der Abbau von DMTU (Dimethylentriharnstoff) und TMTU (Tetramethylentriharnstoff) wird durch dasselbe Enzym katalysiert. Im ersten Reaktionsschritt werden sowohl Ammonium und Kohlendioxid als auch ein aminierter Methyl-MDU (Methyl-DMTU) gebildet. Dieser hydrolysiert zum Ammonium und N-hydroxymethyl-MDU oder N-hydroxymethyl-DMTU. Diese Verbindung wird anschließend zur Formaldehyd und MDU bzw. DMTU abgebaut und über den oben beschriebenen Weg weiter verwertet.

Ein wesentlicher Vorteil der Erfindung kann darin gesehen werden, dass die Umhüllung des die Wirksubstanzen enthaltenden Kerns in einem mikrobiellen, d. h. einem von Bakterien verursachten Prozess, abgebaut wird. Die für den mikrobiellen Abbau vorteilhaften Bedingungen sind mit den für das Pflanzenwachstum vorteilhaften Bedingungen weitgehend deckungsgleich, insbesondere was Temperatur und den Feuchtigkeitsgehalt des Bodens betrifft. Der in den Elementen oder Partikeln enthaltene Wirkstoff oder die Wirkstoffe werden also gerade dann freigesetzt, wenn diese beispielsweise von den Pflanzen verstärkt benötigt werden.

So können die komplexen chemischen und/oder physikalischchemischen Bedingungen in Böden das sogenannte Bodenklima berücksichtigt werden, wobei die Bakterien gewissermaßen als Bioaktoren für die Nährstofffreisetzung fungieren.

Insbesondere können auf diese Weise starke Abhähgigkeiten von einzelnen physikalischen und/oder chemischen Parametern im Boden, insbesondere von der Temperatur, vermieden werden.

Weiterhin können die im Kern enthaltenen Wirksubstanzen durch die Umhüllung bis zu deren Abbau vor chemischer Einwirkung, beispielsweise durch Oxidation oder durch gleichzeitig auf den Boden aufgebrachte aggressive Pflanzenschutzmitteln, und/oder vor physikalischer Einwirkung, wie Auswaschung, UV-Strahlung geschützt werden.

Ein weiterer wesentlicher Vorteil besteht im Hinblick auf Umweltaspekte darin, dass die Umhüllung vollständig im Boden zu Kohlendioxid, Ammoniak und Wasser abgebaut wird, so dass auch langfristig keine Nachteile für die behandelten Böden zu befürchten sind.

Da die verschiedenen Methylen-Harnstoffpolymere unterschiedlich schnell mikrobiell abgebaut werden, ist eine Weiterbildung der Erfindung besonders bevorzugt, bei der der Methylenharnstoff des Hüllmaterials eine Mischung aus Harnstoff-Formaldehyd-Kondensationsprodukten mit unterschiedlicher Kettenlänge ist. Die Herstellung von Methylen-harnstoff lässt sich durch die Kondensation von Harnstoff und Formaldehyd besonders kostengünstig durchführen.

Insbesondere ist vorteilhaft, dass zur Einstellung einer definierten Freisetzung der mindestens einen Wirksubstanz die Mischung des Hüllmaterials ein definiertes Verhältnis der unterschiedlichen Harnstoff-Formaldehyd-Kondensationsprodukten zueinander aufweist.

Der zeitliche Verlauf des Abbaus des Hüllmaterials und damit auch der zeitliche Verlauf beispielsweise einer Nährstofffreisetzung kann so definiert eingestellt werden.

Um eine Freisetzung der im Kern enthaltenen Wirksubstanzen über einen besonders langen Zeitraum zu erzielen, kann der Methylenharnstoff des Hüllmaterials im Wesentlichen aus langkettigen Methylenharnstoff-Polymeren, insbesodere aus TMTU, TMPU und/oder PMHU usw., bestehen. TMTU, TMPU und PMHU steht hier für Trimethylen-Tetraharnstoff, Tetramethylen-Pentaharnstoff bzw. Pentamethylen-Hexaharnstoff. Es kann so ein Langzeitdünger geschaffen werden, welcher über eine ein- oder mehrjährige Wachstumsphase eine ausreichende Nährstoffversorgung sicher stellt.

Weiterhin ist es in diesem Zusammenhang zweckmäßig, wenn der Anteil von kurzkettigen Methylenharnstoff-Polymeren, nämlich MDU und DMTU, am Methylenharstoff des Hüllmaterials weniger als 10%, vorzugsweise weniger als 6%, beträgt.

Das Hüllmaterial kann zur Verstärkung von Fasern, insbesondere Naturfasern enthalten. Hierdurch kann einer mechanischen Beanspruchung des Elements, welches auch als Teilchen oder Korn bezeichnet werden kann, beispielsweise einem Abrieb oder einem Abschlagen des Hüllmaterials während eines Transports vorgebeugt werden. Als Naturfasern können insbesondere Baumwollfasern aber auch Hanf, Flachs, Sisal usw. verwendet werden.

Für zahlreiche Anwendungen ist es von Vorteil, wenn der Kern mehrere verschiedene Wirksubstanzen enthält.

Der Kern kann insbesondere als Wirksubstanz mindestens einen Pflanzenhilfsstoff, insbesondere Dünger, Pflanzenschutzmittel, Wachstumsregler, Bodenverbesserungsmittel und/oder Netzmittel, enthalten. Nötigenfalls können selbst Enzyme und Bakterien, insbesondere der Bakterienstamm Ochrabactrum anthropi in dem Kern vorgesehen werden.

Es kann beispielsweise zweckmäßig sein, in einem Kern sowohl einen Dünger, also einen beliebigen Pflanzennährstoff, insbesondere Spurenelemente, Mikronährstoffe, Harnstoff, N-, P-, K-Dünger und/oder CaNO₃, als auch einen Wachstumsregler, wie ein Hormon, vorzusehen.

Der Kern kann aber auch als Wirksubstanz ein Saatgut enthalten, wobei bei dieser Anwendung die schützenden Eigenschaften der Umhüllung aus Methylenharnstoff in besonders positiver Weise zum Tragen kommen, da Saatgut häufig sehr empfindlich gegen physikalische und/oder chemische Einwirkung ist. Durch die Umhüllung kann somit Saatgut eingespart werden, da es zielgenauer und mit weniger Verlusten eingesetzt werden kann.

Für den Fall, dass im Kern mehrere Wirksubstanzen untergebracht werden sollen, kann auch vorgesehen sein, dass der Kern in Schichten aufgebaut ist, die jeweils unterschiedliche Wirksubstanzen enthalten.

Insbesondere kann vorgesehen sein, dass einzelnen Schichten voneinander durch Methylenharnstoff-Schichten getrennt sind. Das Abbauverhalten dieser Zwischenschichten kann wieder, wie beim einfachen Element, durch Veränderung der relativen Zusammensetzung des Methylen-Harnstoff-Polymers eingestelt werden. Auf diese Weise kann beispielsweise ein Compound aus Saatgut, Wachstumsregler und Dünger erzeugt werden.

Ein gattungsgemäßes Verfahren ist erfindungsgemäß dadurch weitergebildet, dass ein Hüllmaterial verwendet wird, welches im Wesentlichen aus Methylenharnstoff und/oder CDU besteht.

Zur definierten Einstellung des Abbauverhaltens des Hüllmaterials kann vorgesehen sein, dass der Methylenharnstoff des Hüllmaterials aus Harnstoff-Formaldeyd-Kondensationsprodukten mit unterschiedlicher Kettenlänge gebildet wird und das zur Einstellung einer definierten Freisetzung der mindestens einen Wirksubstanz das Hüllmaterial aus den einzelnen Harnstoff-Formaldehyd-Kondensationsprodukten einer Kettenlänge in einem bestimmten Verhältnis zu einander zusammengesetzt wird.

Bei einer besonders einfachen und kostengünstigen Variante des Verfahrens werden die Kerne der Elemente durch Extrusion eines Kernmaterials, das die mindestens eine Wirksubstanz enthält, hergestellt.

Auf die so hergestellten Kerne kann das Hüllmaterial vorzugsweise durch Sprühen oder Dragieren aufgebracht werden, wobei jedoch auch andere geeignete Beschichtungsverfahren zum Einsatz kommen können.

Bei einer weiteren Abwandlung des Verfahrens werden die Elemente durch Coextrusion hergestellt, wobei ein innerer Strang eines Kernmaterials, das die mindestens eine Wirksubstanz enthält, extrudiert wird, wobei zur Bildung einer Umhüllung gleichzeitig das Hüllmaterial extrudiert wird und der innere Strang mit dem Hüllmaterial überzogen wird, und wobei anschließend zur Bildung der Elemente der Strang abgelängt wird. Dem Hüllmaterial können vor dem Auftragen auf den Kern Fasern zugegeben werden. Das Ablängen kann durch eine Schneid- oder Granuliereinrichtung oder durch einfaches Abbrechen des Stranges erfolgen.

Hierbei kann vorgesehen sein, dass beim Ablängen die Umhüllung ganz oder teilweise geschlossen wird. Ebenso können aber zum Schließen des Hüllmaterials und zur Bildung der fertigen Elemente die vom Strang abgelängten Stücke rondiert werden. Durch den Verfahrensschritt des Rondierens kann die vollständige Umhüllung der Kerne mit dem Hüllmaterial besonders zuverlässig sichergestellt werden.

Die Erfindung wird im Folgenden anhand des in der Zeichnung schematisch dargestellten Ausführungsbeispiels weiter erläutert. In dieser Zeichnung zeigt
- Fig. 1: in schematischer, stark vergrößerter Ansicht ein erfindungsgemäßes chemisches Erzeugnis und
- Fig. 2: in schematischer Darstellung die Metabolisierung des Hüllmaterials des erfindungsgemäßen chemischen Erzeugnisses im Boden.

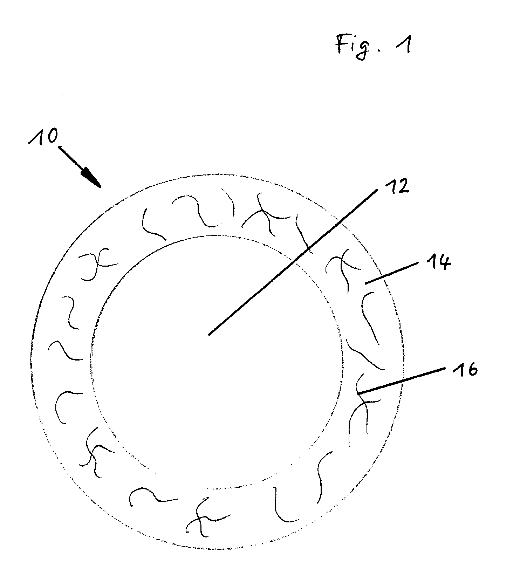

Fig. 1 zeigt ein erfindungsgemäßes chemisches Erzeugnis, welches als Element 10 eines streubaren Düngermittels ausgebildet ist. Das Element 10 besteht aus einem ein Düngermaterial enthaltenden Kern 12, wobei es sich bei dem Düngermaterial um einen herkömmlichen NPK-Dünger, Harnstoff aber auch Calziumnitrat handeln kann.

Der Kern 12 ist von einer Umhüllung aus einem Hüllmaterial 14 umgeben, welches erfindungsgemäß im Wesentlichen, also zu über 50%, aus Methylen-Harnstoff aufweist. Zum Schutz der Umhüllung von mechanischer Beanspruchung, beispielsweise durch Abrieb, sind in das Hüllmaterial 14 außerdem Baumwollfasern 16 aufgenommen.

Der Methylen-Harnstoff des Hüllmaterials besteht zu etwa 90 Prozent aus TMTU, TMPU und PMHU sowie zu jeweils weniger als drei Prozent aus MDU und DMTU.

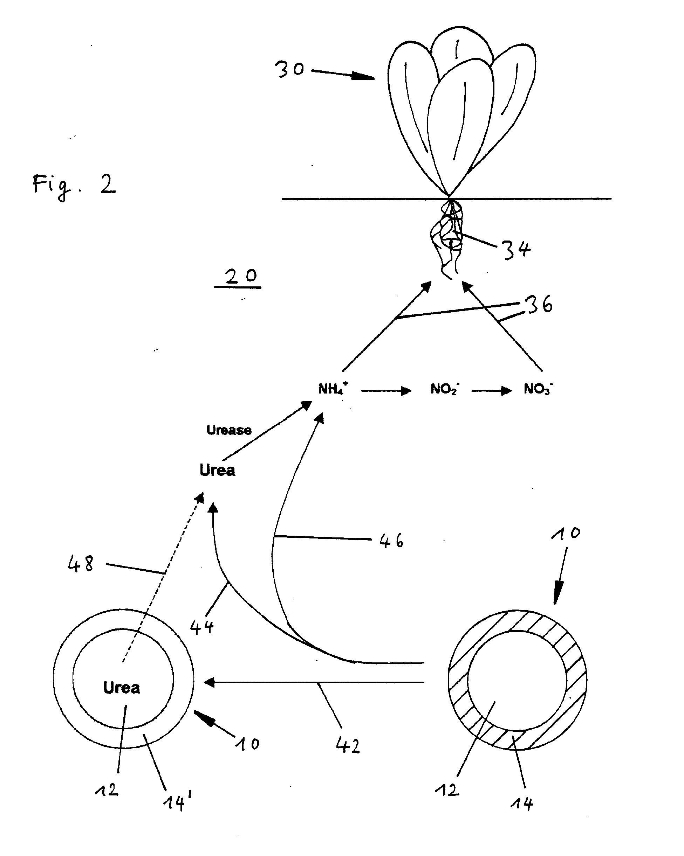

In Figur 2 ist ein in einem Boden 20 eingebrachtes kornförmiges Element 10 eines Düngers dargestellt. Im Boden 20 ist das Hüllmaterial 14, das im Wesentlchen aus Methylen-harnstoff besteht, durch Bakterien einem Abbauprozess unterworfen, der durch Pfeile 42, 44, 46 schematisch dargestellt ist. Das Hüllmaterial 14 geht bei fortschreitendem mikrobiellem Abbau über in eine durchlässige Umhüllung 14', durch welche die Wirksubstanz, im vorliegenden Beispiel Harnstoff, in den Boden austreten kann. Der Harnstoff des Kerns und der abgebaute Harnstoff des Hüllmaterials 14 werden durch das Enzym Urease weiter zu Ammonium NH₄₊ abgebaut und durch die im Boden vorliegende nitrifizierende Bakterienflora über Nitrid zu Nitrat umgewandelt.

Sowohl Ammonium als auch Nitrat stehen der Pflanze (30) als Nahrungsquelle zur Verfügung und können über das Wurzelwerk (34) aufgenommen werden. Durch definierte Freisetzung der Nährstoffe wird eine Schädigung des Wurzelwerks durch zu hohe lonenkonzentrationen vermieden und eine gleichmäßig langfristige Nährstoffversorgung sichergestellt. Der erfindungsgemäße Dünger kann rückstandsfrei im Boden abgebaut werden.

## Patentansprüche

1. Chemisches Erzeugnis, insbesondere Düngemittel, mit einem Kern (12), der mindestens eine Wirksubstanz enthält und der von einem Hüllmaterial (14) überzogen ist, welches sich von der Wirksubstanz unterscheidet,
**dadurch gekennzeichnet,**
**dass** das Hüllmaterial (14) im Wesentlichen aus Methylenharnstoff und/oder CDU besteht.

2. Chemisches Erzeugnis nach Anspruch 1,
**dadurch gekennzeichnet,**
**dass** der Methylenharnstoff des Hüllmaterials (14) eine Mischung aus Harnstoff-Formaldehyd-Kondensationsprodukten mit unterschiedlicher Kettenlänge ist.

3. Chemisches Erzeugnis nach Anspruch 2,
**dadurch gekennzeichnet,**
**dass** zur Einstellung einer definierten Freisetzung der mindestens einen Wirksubstanz die Mischung des Hüllmaterials (14) ein definiertes Verhältnis der unterschiedlichen Harnstoff-Formaldehyd-Kondensationsprodukte zueinander aufweist.

4. Chemisches Erzeugnis nach einem der Ansprüche 1 bis 3,
**dadurch gekennzeichnet,**
**dass** der Methylenharnstoff des Hüllmaterials (14) im Wesentlichen aus langkettigen Methylenharnstoff-Polymeren, insbesondere aus TMTU, TMPU und/oder PMHU usw., besteht.

5. Chemisches Erzeugnis nach einem der Ansprüche 1 bis 4,
**dadurch gekennzeichnet,**
**dass** der Anteil von kurzkettigen Methylenharnstoff-Polymeren, nämlich MDU und DMTU, am Methylenharnstoff des Hüllmaterials (14) weniger als 10%, vorzugsweise weniger als 6%, beträgt.

6. Chemisches Erzeugnis nach einem der Ansprüche 1 bis 5,
**dadurch gekennzeichnet,**
**dass** das Hüllmaterial (14) zur Verstärkung Fasern (16), insbesondere Naturfasern, enthält.

7. Chemisches Erzeugnis nach einem der Ansprüche 1 bis 6,
**dadurch gekennzeichnet,**
**dass** der Kern (12) mehrere verschiedene Wirksubstanzen enthält.

8. Chemisches Erzeugnis nach einem der Ansprüche 1 bis 7,
**dadurch gekennzeichnet,**
**dass** der Kern (12) als Wirksubstanz mindestens einen Pflanzenhilfsstoff, insbesondere Dünger, Pflanzenschutzmittel, Wachstumsregler, Bodenverbesserungsmittel und/oder Netzmittel, enthält.

9. Chemisches Erzeugnis nach einem der Ansprüche 1 bis 8,
**dadurch gekennzeichnet,**
**dass** der Kern (12) als Wirksubstanz ein Saatgut enthält.

10. Chemisches Erzeugnis nach einem der Ansprüche 1 bis 9,
**dadurch gekennzeichnet,**
**dass** der Kern (12) als Düngematerial Harnstoff, N-, P-, K-Dünger und/oder CaNO₃ enthält.

11. Chemisches Erzeugnis nach einem der Ansprüche 1 bis 10,
**dadurch gekennzeichnet,**
**dass** der Kern (12) in Schichten aufgebaut ist, die jeweils unterschiedliche Wirksubstanzen enthalten.

12. Verfahren zur Herstellung eines chemischen Erzeugnisses, insbesondere eines Düngemittels, insbesondere nach einem der Ansprüche 1 bis 11,
bei dem Kerne (12) einzelner Elemente (10) gebildet werden, die mindestens eine Wirksubstanz enthalten und die mit einem von der Wirksubstanz verschiedenen Hüllmaterial (14) überzogen werden,
**dadurch gekennzeichnet,**
**dass** ein Hüllmaterial (14) verwendet wird, welches im Wesentlichen aus Methylenharnstoff und/oder CDU besteht.

13. Verfahren nach Anspruch 12,
**dadurch gekennzeichnet,**
**dass** der Methylenharnstoff des Hüllmaterials (14) aus Harnstoff-Formaldehyd-Kondensationsprodukten mit unterschiedlicher Kettenlänge gebildet wird und
**dass** zur Einstellung einer definierten Freisetzung der mindestens einen Wirksubstanz das Hüllmaterial aus den einzelnen Harnstoff-Formaldehyd-Kondensationsprodukten einer Kettenlänge in einem bestimmten Verhältnis zueinander zusammengesetzt wird.

14. Verfahren nach einem der Ansprüche 12 oder 13,
**dadurch gekennzeichnet,**
**dass** die Kerne (12) der Elemente (10) durch Extrusion eines Kernmaterials, das die mindestens eine Wirksubstanz enthält, hergestellt werden.

15. Verfahren nach einem der Ansprüche 12 bis 14,
**dadurch gekennzeichnet,**
**dass** das Hüllmaterial (14) durch Sprühen oder Dragieren aufgebracht wird.

16. Verfahren nach Anspruch 12,
**dadurch gekennzeichnet,**
**dass** die Elemente (10) durch Coextrusion hergestellt werden,
**dass** ein innerer Strang eines Kernmaterials, das die mindestens eine Wirksubstanz enthält, extrudiert wird, dass zur Bildung einer Umhüllung gleichzeitig das Hüllmaterial extrudiert wird, und der innere Strang mit dem Hüllmaterial überzogen wird, und
**dass** anschließend zur Bildung der Elemente der Strang abgelängt wird.

17. Verfahren nach Anspruch 16,
**dadurch gekennzeichnet,**
**dass** beim Ablängen die Umhüllung der Elemente (10) ganz oder teilweise geschlossen wird.

18. Verfahren nach einem der Ansprüche 16 oder 17,
**dadurch gekennzeichnet,**
**dass** zum Schließen des Hüllmaterials und zur Bildung der fertigen Elemente die vom Strang abgelängten Stücke rondiert werden.
